# EUROPÄISCHE PATENTSCHRIFT

(11) **EP 0 889 812 B1**
(45) Veröffentlichungstag und Bekanntmachung des Hinweises auf die Patenterteilung: **21.06.2000**
(21) Anmeldenummer: 97921719.7
(22) Anmeldetag: 23.04.1997
(51) Int. Cl.: B60R 22/46

(54) **STRAFFER FÜR EINEN SICHERHEITSGURT**
SEAT BELT TENSIONER
TENDEUR POUR CEINTURE DE SECURITE

(30) Priorität: 23.04.1996 DE 29607362 U; 20.05.1996 DE 29609054 U
(43) Veröffentlichungstag der Anmeldung: 13.01.1999
(73) Patentinhaber: TRW Occupant Restraint Systems GmbH & Co. KG, 73551 Alfdorf (DE)
(72) Erfinder: WIER, Franz, D-73571 Göggingen (DE)
(74) Vertreter: Kitzhofer, Thomas, Dipl.-Ing.
(86) Internationale Anmeldenummer: EP9702067
(87) Internationale Veröffentlichungsnummer: WO9739923

(56) Entgegenhaltungen:
- US-A- 4 458 921

## Beschreibung

Die Erfindung betrifft einen Straffer für einen Sicherheitsgurt, mit einer Kolben/Zylinder-Einheit, die einen Zylinder und einen in dessen Innerem angeordneten Kolben umfaßt, einer Druckgasquelle, auf deren Aktivierung hin der Kolben verschoben wird, einer Gurtangriffseinrichtung, die am Sicherheitsgurt angreift, einem Zugübertragungsmittel, welches den Kolben mit der Gurtangriffseinrichtung verbindet, und einer Dämpfungseinrichtung zur Absorption von Energie beim Verzögern der Gurtangriffseinrichtung, wobei der Zylinder ein der Gurtangriffseinrichtung näheres, erstes und ein ihr entfernteres, zweites Ende aufweist, wobei die Dämpfungseinrichtung ein mit dem Zugübertragungsmittel verbundenes, das Zugübertragungsmittel wenigstens teilweise umgebendes und in nicht betätigtem Zustand des Straffers außerhalb des Zylinders angeordnetes erstes Teil und ein mit dem Zylinder verbundenes, zweites Teil aufweist, das an der Stirnwand vorgesehen ist, wobei die Teile beim Straffen aufeinander zu bewegt werden und für die Dämpfung sorgen.

Straffer für Sicherheitsgurte müssen aufgrund des geringen, im Fahrzeug zur Verfügung stehenden Raumes möglichst klein bauen. Im Inneren oder außerhalb des Zylinders ist üblicherweise eine die axiale Länge des Straffers negativ beeinflussende Dämpfungseinrichtung vorgesehen, die den Kolben am Ende des Straffweges abbremst und dabei Energie absorbiert, wodurch Spannungsspitzen abgebaut werden. Aufgrund der bislang notwendigen Länge von Straffweg und Dämpfungsweg haben bekannte Straffer eine solche axiale Baulänge, daß sie nicht ohne Seilumlenker im Fahrzeug eingebaut werden können.

Aus der US-A-4,458,921 ist ein gattungsgemäßer Straffer bekannt, der ein das Zugseil umgebendes Dämpfungselement in Form einer Hülse hat, die an einen mit dem Zugseil verbundenen Umlenkbeschlag angrenzt. Dieses Dämpfungsteil schneidet sich am Ende des Straffvorgangs in eine stirnseitige in der Zylinderstirnwand angeordnete Dichtung ein und wird darin gefangen. Dieser Vorgang dient der Dämpfung am Ende des Straffweges. Der Dämpfungsweg ist konzeptbedingt aber extrem kurz, so daß die Belastungen bei der Dämpfung sehr hoch sind.

Die Erfindung schafft einen Straffer, der bei gleichem Straffweg im Vergleich zu bekannten Straffern in axialer Richtung deutlich kürzer ist, ohne daß dies auf Kosten einer verschlechterten Dämpfungswirkung erreicht wird. Dies wird bei einem Straffer der eingangs genannten Art dadurch erreicht, daß beim Dämpfungsvorgang das erste Teil das zweite Teil wenigstens teilweise in das Innere des Zylinders verschiebt. Bei bislang bekannten Straffern ist die Dämpfungseinrichtung entweder vollständig innnerhalb oder vollständig außerhalb des Zylinders angeordnet oder es ist eine innerhalb und eine außerhalb des Zylinders angeordnete Dämpfungseinrichtung vorgesehen. Wenn die Dämpfungseinrichtung außerhalb des Zylinders ist, bleibt die Gestalt des Zylinders auch nach dem Straffvorgang unverändert. Im Gegensatz hierzu sieht die Erfindung vor, daß wenigstens eines der Teile der Dämpfungseinrichtung am Ende des Straffvorgangs in das Innere des Zylinders eindringt. Die Verschiebung oder Deformation der Stirnwand des Zylinders wird gezielt zur Dämpfung verwendet. Der Straffvorgang wird durch die Gestaltänderung des Zylinders nicht negativ beeinträchtigt, und der gesamte Straffer kann durch die prinzipbedingte axial kürzere Bauweise ohne Seilumlenker im Fahrzeug eingebaut werden.

Wenn das erste Teil auf das zweite Teil trifft, kann gemäß einer bevorzugten Ausführungsform das zweite Teil durch das Auftreffen des ersten Teils in das Innere des Zylinders verschoben werden.

Darüber hinaus ist es auch möglich, daß das erste Teil in das zweite Teil eindringt und dabei das zweite Teil in das Innere des Zylinders verschiebt.

Eine dritte Möglichkeit besteht darin, daß das erste Teil in das zweite Teil eindringt und das erste Teil in das Innere des Zylinders gelangt. Dies ist beispielsweise dadurch erreichbar, daß das erste Teil so tief in das zweite Teil eindringt, daß es bis in das Innere des Zylinders ragt.

Zur Vereinfachung der Herstellung ist das zweite Teil wenigstens ein Abschnitt der Stirnwand des Zylinders am ersten Ende. Da eine gezielte Deformation und/oder Verschiebung des zweiten Teils beim Auftreffen des ersten Teils gewünscht ist, ist das zweite Teil als am Zylinder befestigtes, separates Teil ausgebildet, welches durch das erste Teil aus seiner Befestigung gelöst wird. Dadurch lassen sich die zwischen erstem und zweitem Teil wirkenden Kräfte beim Verzögern des Gurtanlenkglieds wirkenden Kräfte in engen, vorbestimmten Grenzen halten.

Eine einfache Möglichkeit der technischen Ausgestaltung des zweiten Teils besteht darin, dieses als Dichtung auszubilden, die das Innere des Zylinders von dessen Äußerem abtrennt und eine Öffnung aufweist, durch die sich das Zugübertragungsmittel erstreckt. Das zweite Teil hat damit eine Doppelfunktion, indem es einerseits der Dämpfung und andererseits als Dichtung wirkt.

Die Dämpfungswirkung kann durch verschiedene Effekte zustandekommen, die einzeln oder in Kombination auftreten können. Einerseits kann durch gezielte plastische Verformung des ersten und/oder des zweiten Teils beim Auftreffen der Teile aufeinander eine Dämpfungswirkung erreicht werden, andererseits kann sie durch das Eindringen des ersten oder zweiten Teils in das Innere des Zylinders und die damit verbundene Veringerung des Volumens des Arbeitsraums im Inneren des Zylinders erreicht werden. In letzerem Fall wirkt der Zylinder wie ein pneumatischer Stoßdämpfer, denn beim Eindringen des ersten oder des zweiten Teils in das Innere des Zylinders wird gegen das restliche, im Arbeitsraum befindliche Druckgas gearbeitet.

Die plastische Verformung kann durch Vorsehen von Elementen zwischen dem ersten und dem zweiten Teil erreicht werden, oder, gemäß einer bevorzugten Ausführungsform, dadurch, daß das zweite Teil einen hülsenförmigen Abschnitt aufweist, der sich im nicht betätigten Zustand des Straffers im wesentlichen außerhalb des Zylinders erstreckt. Im betätigten Zustand des Straffers verformt das erste Teil den hülsenförmigen Abschnitt.

Die zuvor beschriebene Arbeitsweise eines hydraulischen Stoßdämpfers kann dadurch erzielt werden, daß im Inneren des Zylinders ein Arbeitsraum für das frei werdende Gas sowie ein Anschlag für den Kolben vorgesehen sind. Die Lage des ersten und zweiten Teils, des Kolbens und des Anschlags sind so aufeinander abgestimmt, daß nach dem Auftreffen des Kolbens auf den Anschlag das erste und/oder zweite Teil in das Innere des Zylinders eindringt und zur Verringerung des Volumens des Arbeitsraums führt.

Um zu vermeiden, daß zuviel Druckgas beim Veringern des Volumens des Arbeitsraums über die Stirnwand am ersten Ende des Zylinders aus dem Arbeitsraum ausströmt, ist ein Dämpfungskolben vorgesehen, der im nicht betätigten Zustand des Straffers im Bereich des ersten Endes angeordnet ist. Der Dämpfungskolben wird durch das erste Teil in Richtung zum Kolben verschoben und verringert dadurch das Volumen des Arbeitsraums. Das zweite Teil kann mit dem Dämpfungskolben gekoppelt oder einstückig mit diesem verbunden sein.

Ein radialer Spalt zwischen der Dämpfungseinrichtung und der Innenwand des Zylinders kann mit zunehmender, vom Dämpfungskolben zurückgelegter Strecke immer kleiner werden, damit weniger Gas aus dem Kolben austritt und der Widerstand für den Dämpfungskolben zunimmt.

Gemäß einer bevorzugten Ausführungsform ist eine Befestigungseinrichtung vorgesehen, die das Zugübertragungsmittel und den Kolben miteinander verbindet, und die so ausgebildet ist, daß das Zugübertragungsmittel vom Kolben beim Verzögern des Kolbens entkoppelt wird. Dadurch entstehen zwei voneinander getrennte Einheiten, nämlich einerseits der Kolben und andererseits das Zugübertragungsmittel mit dem Gurtanlenkglied. Diese beiden Einheiten können getrennt voneinander und zeitlich nacheinander, gegebenenfalls mit zwei getrennten Dämpfungseinrichtungen gebremst werden.

Um weiteren Bauraum zu sparen, kann die Druckgasquelle im Inneren des Zylinders angeordnet sein und an die Stirnwand am ersten Ende angrenzen. Das Gehäuse des Gasgenerators kann dadurch Teil des Dämpfungskolbens sein und mit dem Auftreffen des ersten Teils weiter ins Innere des Zylinders verschoben werden.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Längsschnittansicht des erfindungsgemäßen Straffers im unbetätigten und, mit unterbrochenen Linien gezeigt, im betätigten Zustand;
Figur 2 eine zweite Ausführungsform des erfindungsgemäßen Straffers in Längsschnittansicht in unbetätigtem Zustand;
Figur 3 eine Längsschnittansicht des beim erfindungsgemäßen Straffer nach Figur 2 eingesetzten Dämpfungskolbens;
Figur 4 den in Figur 2 gezeigten Straffer nach Zurücklegen des gesamten Straffweges;
Figur 5 den in den Figuren 2 und 4 gezeigten Straffer, bei dem sich das Gurtschloß mit dem Zugseil über den Straffweg hinaus in Richtung zum Fahrzeugboden bewegt;
Figur 6 eine Längsschnittansicht einer dritten Ausführungsform des erfindungsgemäßen Straffers in unbetätigtem Zustand;
Figur 7 eine Längsschnittansicht durch den in Figur 6 gezeigten Straffer nach Zurücklegen des Straffweges, entsprechend dem in Figur 4 dargestellten Zustand;
Figur 8 den in den Figuren 6 und 7 gezeigten Straffer zu einem Zeitpunkt nach Zurücklegen des Straffweges, wenn das Gurtschloß und das Zugseil sich weiter in Richtung Fahrzeugboden bewegen, entsprechend dem in Figur 5 dargestellten Zeitpunkt;
Figuren 9 bis 11 eine weitere Ausführungsform des erfindungsgemäßen Straffers in verschiedenen Phasen, die den in den Figuren 2, 4 und 5 oder 6, 7 und 8 gezeigten Phasen entsprechen;
Fig. 12 eine weitere Ausführungsform des erfindungsgemäßen Straffers mit außerhalb des Zylinders angeordnetem Treibsatz;
Fig. 13 eine Ausführungsform des erfindungsgemäßen Straffers in nicht betätigtem Zustand, bei dem der Dämpfungskolben nicht plastisch verformt wird;
Fig. 14 den in Fig. 13 gezeigten Straffer in betätigtem Zustand;
Fig. 15 eine Ausführungsform des erfindungsgemäßen Straffers, bei dem sich die Seilkausche zum Zylinder hin konisch verjüngt, im unbetätigten Zustand;
Fig. 16 den in Fig. 15 gezeigten Straffer mit in den Dämpfungskolben eingedrungener Seilkausche; und
Fig. 17 eine Seilbefestigung, die das erste Teil der Dämpfungseinrichtung bilden kann.

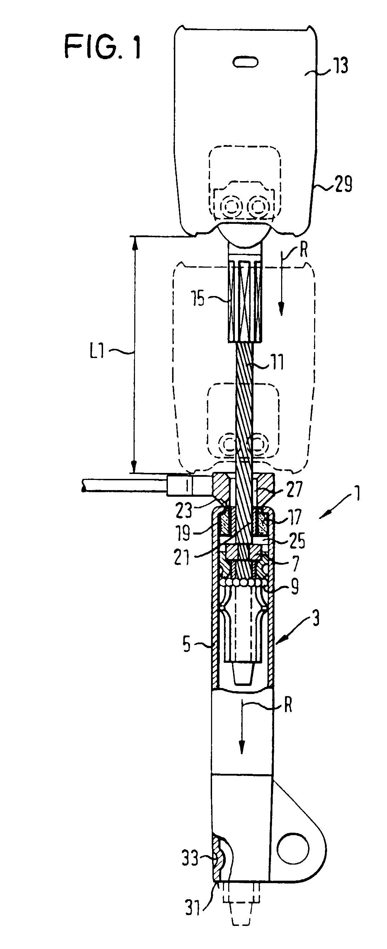

In Fig. 1 ist ein Straffer 1 für einen Sicherheitsgurt (nicht gezeigt) dargestellt. Der Straffer umfaßt eine Kolben/Zylinder-Einheit 3, bestehend aus einem Zylinder 5 und einem im Inneren des Zylinders verschiebbar angeordneten Kolben 7 mit üblichen Sperrelementen 9 auf seiner teilweise konischen Außenkontur. Am Kolben 7 ist ein Zugübertragungsmittel 11 in Form eines Zugseils nicht lösbar befestigt. An dem gegenüberliegenden Ende des Zugübertragungsmittels 11 ist eine Gurtangriffseinrichtung 13 in Form eines Gurtschlosses über eine Seilkausche 15 befestigt. Die Seilkausche 15 steht radial gegenüber dem Zugübertragungsmittel 11 vor. Im Inneren des Zylinders ist eine Druckgasquelle 17 an dem der Gurtangriffseinrichtung 13 zugewandten, ersten Ende des Zylinders 5 angeordnet. Die Druckgasquelle 17 hat ein hohles, kreisringförmiges Gehäuse 19, welches mit Treibmittel gefüllt ist. Durch eine zentrische Öffnung 21 des Gehäuses 19 erstreckt sich das Zugübertragungsmittel 11 hindurch bis zum Kolben 7. Das Gehäuse 19 schließt die ansonsten offene Stirnwand 23 des Kolbens 7 nach außen hin ab und dient als Dichtung zwischen dem Inneren des Zylinders 5 und dem Äußerem. Die Innenseite des Gehäuses 19 dient zusätzlich als Führung und Dichtung für das beim Straffvorgang an der Innenseite des Gehäuses 19 entlanggleitenden Zugübertragungsmittel 11.

Zwischen dem Kolben 7 und der dem Kolben 7 näheren Stirnwand des Gehäuses 19 ist ein Arbeitsraum 25 gebildet, in den nach Zünden des Treibmittels im Inneren der Druckgasquelle 17 das Gas strömt. An die Stirnwand 23 grenzt eine ringförmige Zündeinheit 27 an, die im Rückhaltefall das Treibmittel zündet und für eine Verschiebung des Kolbens 7 zusammen mit dem Zugmittel 11 und dem Gurtschloß 13 sorgt. Mit L1 ist der maximale Straffweg bezeichnet und mit R die Richtung des Straffvorgangs.

Der in Fig. 1 gezeigte Straffer baut in axialer Richtung sehr kurz, da das Zugübertragungsmittel 11 im Vergleich zur Länge des Zylinders 5 so kurz ausgebildet ist, daß die Seilkausche 15 im Rückhaltefall in das Innere des Zylinders 5 eindringt und das Gehäuse 29 des Gurtschlosses annähernd an der Zündeinheit 27 anliegt. An der Innenwand des Zylinders 5 ist im Bereich der dem Gurtschloß 13 fernen, vollständig offenen Stirnwand 31, ein durch Eindrücken nach Innen vorstehender Anschlag 33 für den Kolben 7 gebildet. Der Zylinder 5 ist so kurz ausgeführt, und der Anschlag 33 ist so nahe an der Stirnwand 31 angeordnet, daß das Zugübertragungsmittel 11 und ein Teil des Kolbens 7 nach erfolgter Straffung aus dem Zylinder 5 herausragen, wie es mit unterbrochenen Linien gezeigt ist. Der Straffer 1 kann aufgrund der offenen Stirnwand 31 kürzer ausgebildet sein, ohne daß dies auf Kosten des Straffwegs geht. Da der Straffer 1 üblicherweise einige Millimeter vor einem fahrzeugseitigen Bauteil angeordnet ist, das üblicherweise durch den Fahrzeugboden oder einen Teppich am Fahrzeugboden gebildet ist, kann im Rückhaltefall dieser Zwischenraum noch zur Verlängerung des Straffweges oder Dämpfungsweges ausgenutzt werden.

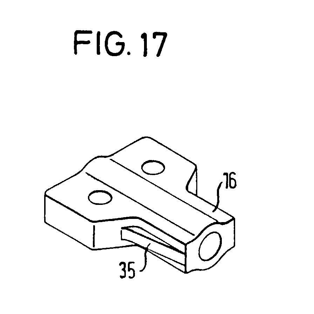

Um Spannungsspitzen beim Abbremsen des Kolbens 7, des Zugübertragungsmittels 11 und des Gurtschlosses 13 nach zurückgelegtem Straffweg L1 zu vermeiden, ist eine Dämpfungseinrichtung vorgesehen. Diese Dämpfungseinrichtung besteht aus mehreren Teilen, nämlich einem ersten Teil, das mit dem Zugübertragungsmittel 11 verbunden ist und seitlich von ihm absteht sowie in nicht betätigtem Zustand des Straffers 1 außerhalb des Zylinders 5 angeordnet ist. Dieses erste Teil kann eine auf das Zugübertragungsmittel 11 aufgepreßte Hülse oder, wie in Fig. 1 gezeigt, die Seilkausche 15 selbst sein, wodurch die axiale Baulänge gering gehalten wird. Darüber hinaus kann es auch eine auf das als Zugseil ausgebildete Zugübertragungsmittel 11 aufgepreßte Seilbefestigung 16 sein, wie sie z.B. in Fig. 17 dargestellt ist. Ein zweites Teil der Dämpfungseinrichtung ist mit dem Zylinder verbunden und an der Stirnwand 23 vorgesehen. Das zweite Teil, auf das sich das erste Teil beim Straffvorgang zu bewegt, ist bei der in Fig. 1 dargestellten Ausführungsform das Gehäuse 19 der Druckgasquelle 17. Die Dämpfung erfolgt dadurch, daß die Seilkausche 15 gegen das Gehäuse 19 prallt und dieses weiter in das Innere des Zylinders 5 schiebt. Auch die Seilkausche 15 dringt in das Innere des Zylinders 5 ein. Das Gehäuse 19 hat in der in Fig. 1 gezeigten Ausführungsform zahlreiche Funktionen, nämlich, das Treibmittel zu umschließen, das Innere des Zylinders 5 vom Äußeren zu trennen, als Führung für das Zugübertragungsmittel 11 zu dienen und schließlich als Teil der Dämpfungseinrichtung zu wirken, indem es dem Verschieben durch die Seilkausche 15 einen Widerstand entgegensetzt. Je nach Dicke der Gehäusewandung kann das Gehäuse 19 auch plastisch verformt werden und dadurch Energie beim Aufprall der Seilkausche 15 absorbieren.

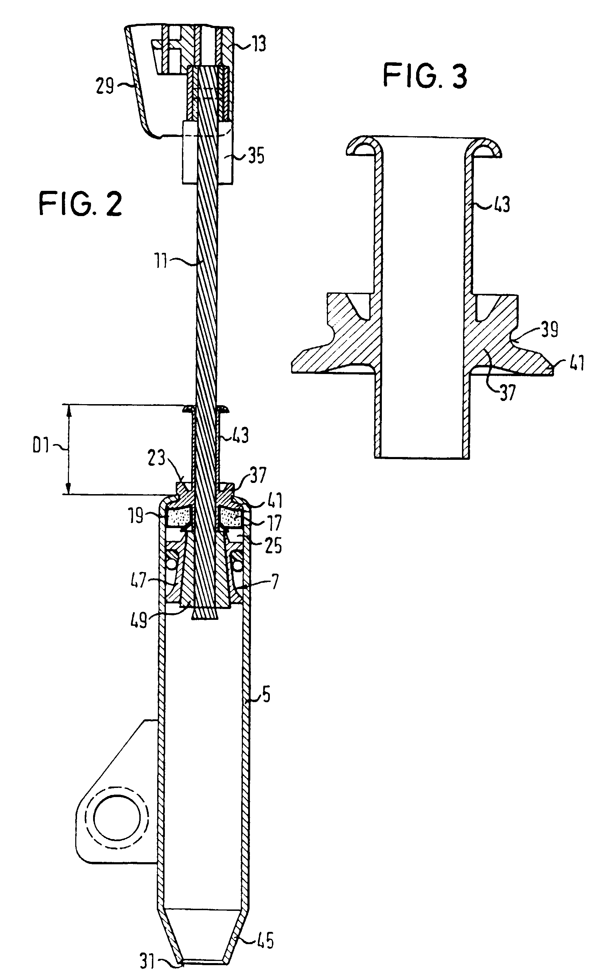

Bei der in Fig. 2 dargestellten Ausführungsform ist die Zündeinheit nicht mehr stirnseitig, sondern an der Mantelseite des Zylinders 5 angeordnet. Das erste Teil der Dämpfungseinrichtung wird nicht mehr durch die Seilkausche 15 gebildet, da die Befestigung des Gurtschlosses 13 am Zugübertragungsmittel 11 innerhalb des Gehäuses 29 erfolgt. Anstatt dessen stehen gegenüber dem Gehäuse 29 zwei Rippen 35 in Richtung Zylinder 5 vor, die das erste Teil der Dämpfungseinrichtung bilden. Bei Verwendung einer Seilbefestigung, wie sie in Fig. 17 gezeigt ist, sind die Rippen 35 Teil der Seilbefestigung und nicht des Gehäuses 29. Das zweite Teil der Dämpfungseinrichtung wird nicht durch das Gehäuse 19 der Druckgasquelle gebildet, sondern durch einen Dämpfungskolben 37, der in Fig. 3 näher gezeigt ist. Der Dämpfungskolben 37 ist aus Metall, vorzugsweise Aluminium, und stellt einen Großteil der Stirnwand 23 des Zylinders 5 dar. Der Dämpfungskolben 37 ist durch Verformung, nämlich Einrollen oder Umbördeln, an dem radial nach innen gebogenen Rand des Zylinders 5, der einen Teil der Stirnwand 23 bildet, befestigt. Dazu hat der Dämpfungskolben 37, wie in Fig. 3 gezeigt ist, eine radiale Ausnehmung 39 auf seinem Außenumfang, in die der Rand des Zylinders 5 eingreift. Ein in das Innere des Zylinders 5 ragender, scheibenförmiger Abschnitt 41 berührt die zylindrische Innenseite des Zylinders 5 und liegt gasdicht an ihr an (vgl. Fig. 2). Der Dämpfungskolben 37 weist ferner einen sich im nicht betätigten Zustand des Straffers 1 im wesentlichen außerhalb des Zylinders 5 erstreckenden hülsenförmigen Abschnitt 43 auf, der u.a. eine Führungsfunktion für das Zugübertragungsmittel 11 hat. Darüber hinaus erstreckt sich der hülsenförmige Abschnitt 43 auch in das Innere des Zylinders 5. An den Abschnitt 43 grenzt unmittelbar die Druckgasquelle 17 an. Der Abschnitt 43 ist mit dem Zugübertragungsmittel 11 verpreßt, um die Dichtwirkung zu verbessern. Ferner wird dadurch eine Bewegung des Zugübertragungsmittels 11 z.B. bei unbeabsichtigtem Anstoßen des Insassen am Gurtschloß 13 verhindert. Erst ab Überschreiten eines vorbestimmten Losreißmoments kann sich im Rückhaltefall das Zugübertragungsmittel aus dieser Arretierung lösen. Zur Erreichung einer besseren Dichtwirkung ist bei Verwendung eines Zugseils als Zugübertragungsmittel 11 dieses außenseitig im Bereich des Dämpfungskolbens 37 mit einem Abdichtmaterial wie Wachs oder Silikon beschichtet, denn das Zugseil weist keine glatte Außenoberfläche auf.

Im Gegensatz zu dem in Fig. 1 gezeigten Zylinder weist der in Fig. 2 gezeigte Zylinder 5 ein zweites Ende 31 auf, das durch eine konisch sich verjüngende Zylinderwandung 45 gekennzeichnet ist.

Im Rückhaltefall wird das Treibmittel gezündet und das erzeugte Gas strömt in den Arbeitsraum 25, wodurch es den Kolben 7 in Richtung Stirnseite 31 verschiebt. Gegen Ende des Straffwegs stoßen die Rippen 35 gegen den hülsenförmigen Abschnitt 43 und verformen diesen plastisch, wodurch ein Teil der Energie absorbiert wird und Spannungsspitzen abgebaut werden. Der Weg, um den der Abschnitt 43 plastisch verformt werden kann, ist mit Dl bezeichnet.

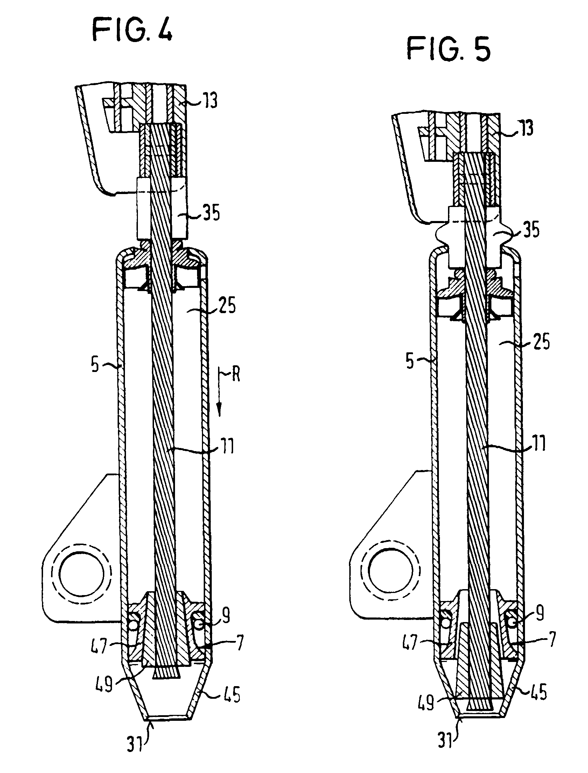

In etwa dann, wenn der hülsenförmige Abschnitt 43 vollständig plastisch gestaucht ist, wie in Fig. 4 gezeigt, hat auch der Kolben 7 das untere Ende des kreiszylindrischen Abschnitts des Zylinders 5 erreicht. Der konische Abschnitt der Zylinderwandung 45 dient als Anschlag für den Kolben 7. Der Kolben 7 ist aus mehreren Teilen zusammengesetzt, u.a. aus einer äußeren, an der Innenseite des Zylinders 5 anliegenden Hülse 47 aus Stahl, deren Öffnung konisch ausgebildet ist. Die konische Öffnung ist durch eine Befestigungseinrichtung 49 ausgefüllt, welche durch einen Aluminiumkonus 49, der auf das Zugübertragungsmittel 11 aufgepreßt ist, gebildet wird. Sobald die Hülse 47 am konischen Zylinderabschnitt 45 anschlägt, löst sich die Befestigungseinrichtung 49 von der Hülse 47 (vgl. Fig. 5), so daß die Hülse 47, die zusammen mit dem Konus 49 den Kolben 7 bildet, vom Zugübertragungsmittel 11 und dem Gurtschloß 13 entkoppelt ist. Dadurch können die voneinander entkoppelten Teile separat verzögert und gedämpft werden, wodurch ein geringerer Bauraum erforderlich ist. Der Straffweg wird durch den Anschlag des Kolbens 7 an dem konischen Zylinderabschnitt 45 begrenzt, das anschließende Weiterbewegen des Zugübertragungsmittels 11 und des Gurtschlosses 13 dient deren Verzögerung unter Verwendung der Dämpfungseinrichtung.

Während sich die Befestigungseinrichtung aus der Hülse 47 herausbewegt, werden die Rippen 35 plastisch verformt, wodurch Energie aufgenommen wird (vgl. Fig. 5). Schließlich löst sich aufgrund der hohen Geschwindigkeit des Gurtschlosses 13 und des Zugübertragungsmittels 11 die Befestigung zwischen dem Dämpfungskolben 37 und dem Zylinder 5, so daß der Dämpfungskolben mitsamt dem Gehäuse 19 weiter ins Kolbeninnere verschoben wird, wie in Fig. 5 gezeigt ist. Das Volumen des Arbeitsraums 25 wird dadurch reduziert, und der Dämpfungskolben 37 arbeitet gegen den Druck des sich noch im Arbeitsraum 25 befindlichen Druckgases, so daß der Zylinder mit dem Dämpfungskolben 37 wie ein Pneumatikdämpfer arbeitet. Das Gas strömt zwischen der Hülse 47 und der Befestigungseinrichtung 49 ins Freie. Wenn die Befestigungseinrichtung 49 auf den konischen Zylinderabschnitt 45 trifft, ist die Dämpfung und Verzögerung des Zugübertragungsmittels 11 und des Gurtschlosses 13 beendet. Der sich nach vollendeter Gurtstraffung nach vorn verlagernde Fahrzeuginsasse drückt das Gurtschloß 13 anschließend zusammen mit der Befestigungseinrichtung 49 in die in Fig. 4 gezeigte Lage zurück. Die Sperrelemente 19 verhindern ein Verschieben des Kolbens und damit auch des Gurtschlosses 13 entgegen der Straffrichtung R. Bei dieser Ausführungsform wird die Dämpfung der sich bewegenden Teile durch plastisches Verformen und durch eine hydraulische Dämpfung erreicht. Diese Effekte können zeitgleich oder zumindest teilweise zeitversetzt erfolgen.

Der Dämpfungskolben 37, der auch als Dichtung wirkt, übt bei nicht betätigtem Straffer 1 auf das Zugübertragungsmittel 11 eine Klemmkraft aus, die ein unbeabsichtigtes Verdrehen oder axiales Verschieben des Zugübertragungsmittels z.B. durch einen versehentlich am Gurtschloß 13 anstoßenden Fahrzeuginsassen verhindert.

Ferner kann der konische Zylinderabschnitt 45 durch die Hülse 47 aus Aluminium oder die Befestigungseinrichtung 49 plastisch verformt werden, um Energie abzubauen.

Damit der Dämpfungskolbens 37 nicht abrupt verzögert wird, können auch von der Innenseite des Zylinders 5 nach innen abstehende Störkonturen vorgesehen sein, die den Kolben 7 und/oder den Dämpfungskolben 37 teilweise verzögern.

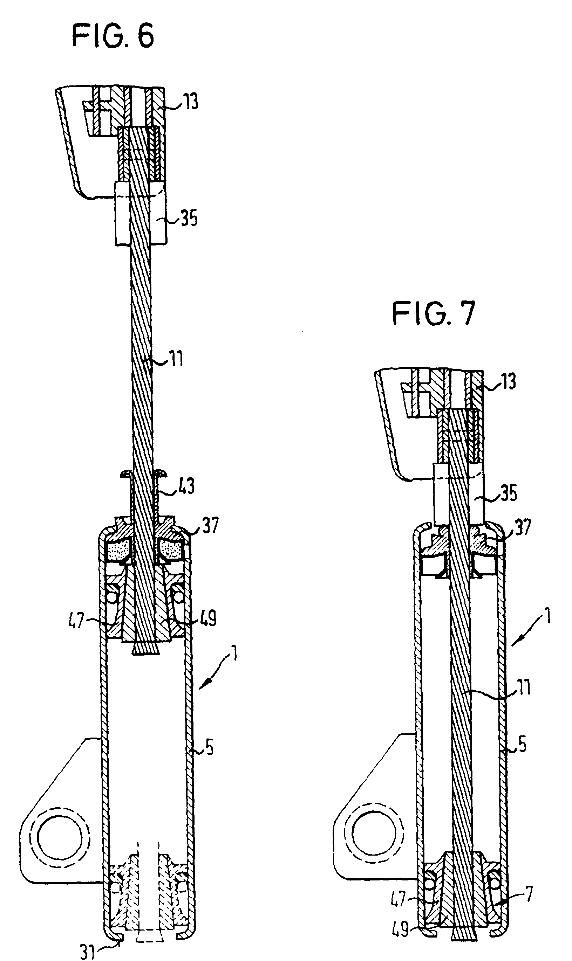

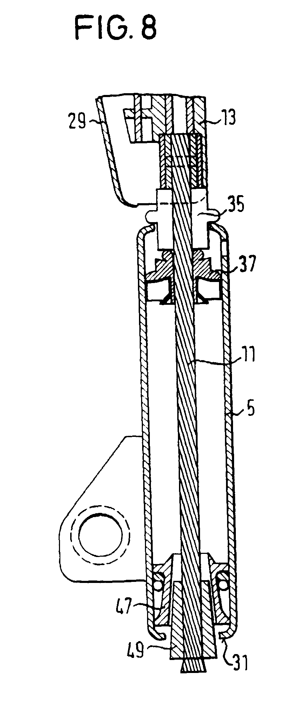

Bei der in den Fign. 6 bis 8 gezeigten Ausführungsform des Straffers 1 ist der Zylinder 5 kürzer als bei der in den Fign. 2 bis 5 dargestellten Ausführungsform ausgebildet, da die als Mitnehmer ausgebildete Befestigungseinrichtung 49 nach vollendeter Straffung (vgl. Fig. 7) durch die offene Stirnwand 31 des Zylinders 5 teilweise hindurchtritt (vgl. Fig. 8). Nachdem die Rippen 35 durch Auftreffen auf den Zylinder 5 deformiert werden und das übrige Gehäuse 29 des Gurtschlosses 13 annähernd den Zylinder 5 erreicht hat, werden das Gurtschloß 13 und das Zugübertragungsmittel 11 vollständig verzögert.

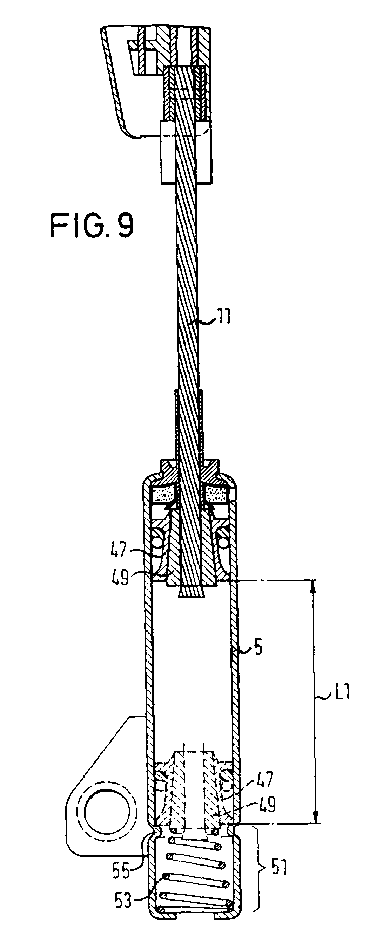

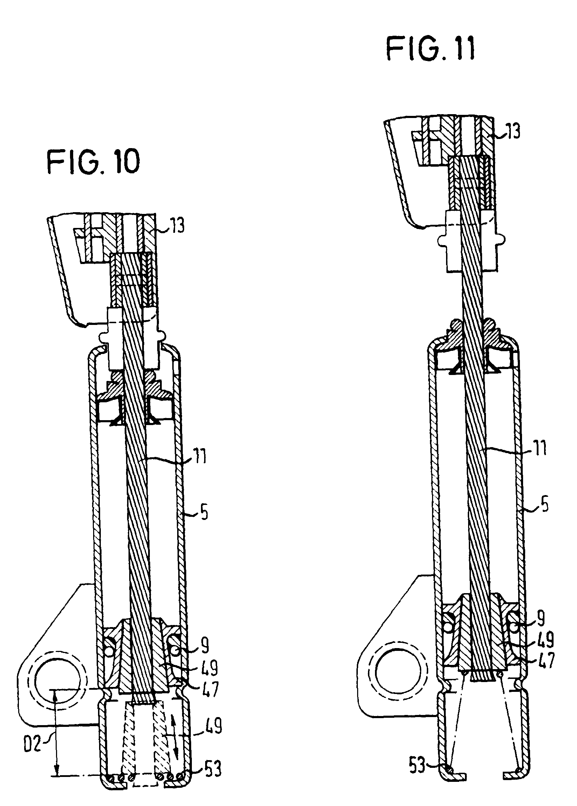

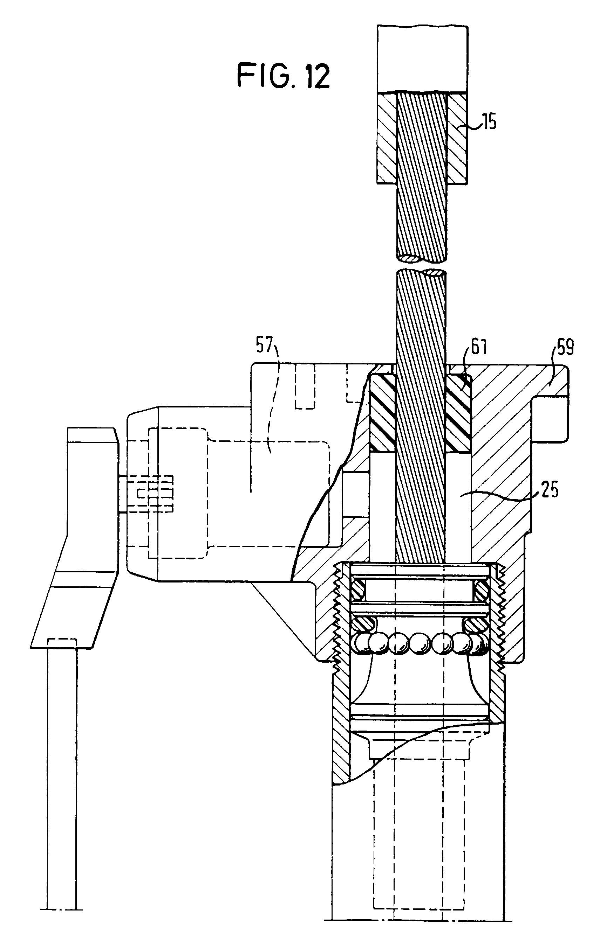

Die in den Fign. 9 und 11 dargestellte Ausführungsform des Straffers unterscheidet sich von der in den Fign. 6 bis 8 dargestellten dadurch, daß der Zylinder 5 um einen Abschnitt 51 verlängert ist, in den sich die Befestigungseinrichtung 49 nach Lösen von der Hülse 47 hineinbewegt. Eine Einbuchtung bildet den Anschlag 55 für den Kolben 7. Ein elastisches Federelement 53 in Form einer Kegelfeder dient einerseits in geringfügigem Maße der Dämpfung des Zugübertragungsmittels 11, wenn sich die Befestigungseinrichtung 49 von der Hülse 47 löst (siehe die untere Stellung des Kolbens 7 in Fig. 9 dazu). Andererseits stellt das Federelement 53, wenn sich die Befestigungseinrichtung 49 um den Dämpfungsweg D2 (vgl. Fig. 10) aus der Hülse 47 bewegt hat, zurück zur Anlage an die Hülse 47. Wenn der Fahrzeuginsasse nach erfolgter Straffung den Sicherheitsgurt ablegen will, setzt das elastische Federelement 53 einer Verschiebung des Gurtschlosses einen gewissen Widerstand entgegen, so daß es ausgeschlossen ist, daß die Entriegelungstaste am Gurtschloß 13 durch Verschieben des Gurtschlosses 13 nicht mehr betätigt werden kann. Dies betrifft insbesondere Straffer, die an einer Rücksitzbank angeordnet sind, da diese ohne das Vorsehen des elastischen Federelements 53 nach dem Straffvorgang zwischen dem Sitz- und dem Rückenpolster eintauchen würden, so daß der Fahrzeuginsasse die Lösetaste nicht mehr erfassen kann. Das elastische Federelement 53 führt damit nach erfolgter Straffung zu der in Fig. 11 gezeigten Lage des Gurtschlosses 13 relativ zum Zylinder 5.

Bei der in Fig. 12 dargestellten Ausführungsform ist ein außerhalb des Innenraums des Zylinders vorgesehener Treibsatz 57 in einem auf den Zylinder 5 aufgeschraubten Gehäuse 59 untergebracht. Im Rückhaltefall wird eine im Gehäuse 59 vorgesehene und das Zugübertragungsmittel 11 umgebende Ringdichtung 61 von der Seilkausche 15 in den Arbeitsraum 25 geschoben, der innerhalb des Gehäuses 59, das eine Verlängerung des Zylinders 5 darstellt, gebildet ist.

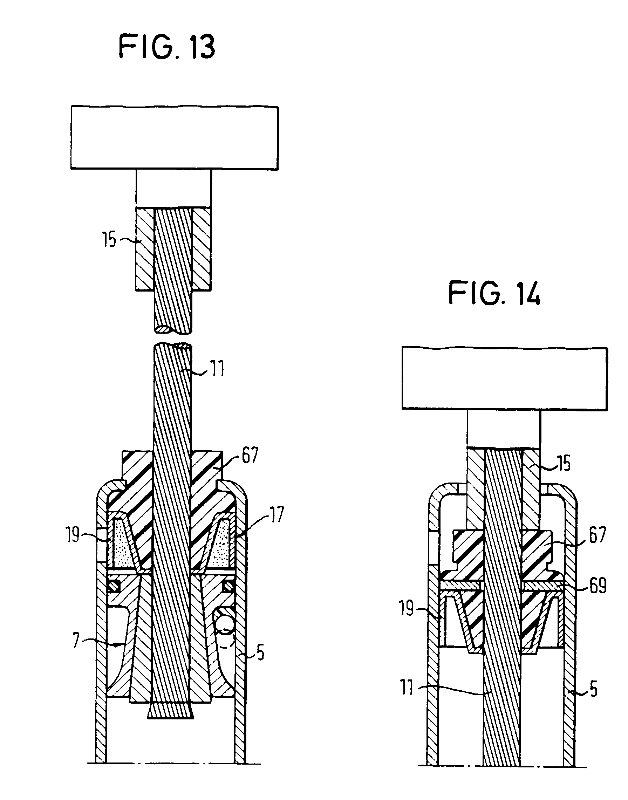

Bei der in Fig. 13 dargestellten Ausführungsform ist ein Dämpfungskolben 67 aus Kunststoff vorgesehen, der beim Auftreffen der Seilkausche 15 aus seiner Verankerung am Zylinder 5 gerissen wird und zusammen mit dem Gehäuse 19 der Druckgasquelle 17 in Richtung Kolben 7 verschoben wird. Im Gegensatz zu dem in Fig. 2 gezeigten Dämpfungskolben 37 wird der Dämpfungskolben 67 jedoch nicht plastisch verformt, so daß er ausschließlich einer pneumatischen Dämpfung dient. In Fig. 14 ist noch eine Verstärkungsplatte 69 angedeutet, die der Verstärkung des Dämpfungskolbens 67 dient.

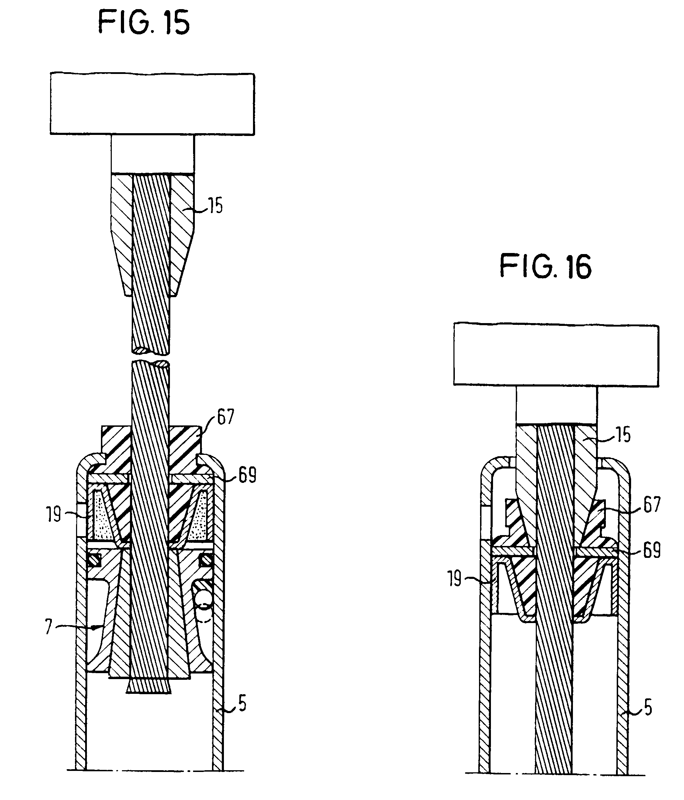

Die in den Fign. 15 und 16 dargestellte Ausführungsformen spricht im wesentlichen der in den Fign. 13 und 14 dargestellten, wobei jedoch die Seilkausche 15 ein sich konisch verjüngendes, dem Zylinder 5 zugewandtes Ende hat, mit dem die Seilkausche 15 in den Dämpfungskolben 67 eindringt und ihn radial verformt sowie aus seiner Befestigung am Zylinder 5 reißt und weiter in das Innere des Zylinders schiebt (vgl. Fig. 16).

## Patentansprüche

1. Straffer für einen Sicherheitsgurt, mit einer Kolben/Zylinder-Einheit (3), die einen Zylinder (5) und einen in dessen Innerem angeordneten Kolben (7) umfaßt, einer Druckgasquelle (17), auf deren Aktivierung hin der Kolben (7) verschoben wird, einer Gurtangriffseinrichtung (13), die am Sicherheitsgurt angreift, einem Zugübertragungsmittel (11), welches den Kolben (7) mit der Gurtangriffseinrichtung (13) verbindet, und einer Dämpfungseinrichtung zur Absorption von Energie beim Verzögern der Bewegung der Gurtangriffseinrichtung (13), wobei der Zylinder (5) ein der Gurtangriffseinrichtung (13) näheres, erstes und ein ihr entfernteres, zweites Ende aufweist, wobei die Dämpfungseinrichtung ein mit dem Zugübertragungsmittel (11) verbundenes, das Zugübertragungsmittel (11) wenigstens teilweise umgebendes und in nicht betätigtem Zustand des Straffers außerhalb des Zylinders (5) angeordnetes erstes Teil und ein mit dem Zylinder (5) verbundenes zweites Teil aufweist, das an der Stirnwand (23) am ersten Ende vorgesehen ist, wobei die Teile beim Straffen aufeinander zu bewegt werden und für die Dämpfung sorgen, dadurch gekennzeichnet, daß beim Dämpfungsvorgang das erste Teil das zweite Teil wenigstens teilweise in das Innere des Zylinders (5) verschiebt.

2. Straffer nach Anspruch 1, dadurch gekennzeichnet, daß das erste Teil auf das zweite Teil auftrifft und das zweite Teil in das Innere des Zylinders (5) verschiebt.

3. Straffer nach Anspruch 1, dadurch gekennzeichnet, daß das erste Teil in das zweite Teil eindringt und das zweite Teil in das Innere des Zylinders (5) verschiebt.

4. Straffer nach Anspruch 1, dadurch gekennzeichnet, daß das erste Teil in das zweite Teil eindringt und das erste Teil in das Innere des Zylinders (5) gelangt.

5. Straffer nach einem der vorstehenden Ansprüche, dadurch gekennzeichnet, daß das zweite Teil wenigstens einen Abschnitt der Stirnwand des Zylinders (5) am ersten Ende bildet.

6. Straffer nach Anspruch 5, dadurch gekennzeichnet, daß das zweite Teil als am Zylinder (5) befestigtes separates Teil ausgebildet ist, welches durch das erste Teil aus seiner Befestigung gelöst wird.

7. Straffer nach einem der vorstehenden Ansprüche, dadurch gekennzeichnet, daß das zweite Teil als Dichtung ausgebildet ist, die das Innere des Zylinders (5) vom Äußeren des Zylinders (5) abtrennt und eine Öffnung aufweist, durch die sich das Zugübertragungsmittel (11) erstreckt.

8. Straffer nach Anspruch 7, dadurch gekennzeichnet, daß zwischen der Außenoberfläche des Zugübertragungsmittels (11) und dem zweiten Teil ein Abdichtmaterial vorgesehen ist.

9. Straffer nach Anspruch 7 oder 8, dadurch gekennzeichnet, daß die Dichtung bei nicht betätigtem Straffer (1) auf das Zugübertragungsmittel (11) eine Klemmkraft ausübt, die einer unbeabsichtigten Verdrehung und einer axialen Verschiebung des Zugübertragungsmittels entgegenwirkt.

10. Straffer nach einem der Ansprüche 5 bis 9, dadurch gekennzeichnet, daß das zweite Teil an seinem Umfangsrand am Zylinder (5) durch Einrollen oder Umbördeln befestigt ist.

11. Straffer nach einem der vorstehenden Ansprüche, dadurch gekennzeichnet, daß das zweite Teil einen hülsenförmigen Abschnitt (43) aufweist, der sich im nicht betätigten Zustand des Straffers (1) im wesentlichen außerhalb des Zylinders (5) befindet, und daß im betätigtem Zustand des Straffers das erste Teil gegen den hülsenförmigen Abschnitt (43) prallt und ihn plastisch verformt.

12. Straffer nach einem der vorstehenden Ansprüche, dadurch gekennzeichnet, daß das zweite Teil aus Metall ist.

13. Straffer nach einem der vorstehenden Ansprüche, dadurch gekennzeichnet, daß im Inneren des Zylinders (5) ein Arbeitsraum (25) für das frei werdende Gas sowie ein Anschlag (55) für den Kolben (7) vorgesehen sind und daß die Lage des ersten und zweiten Teils, des Kolbens (7) und des Anschlags (55) so aufeinander abgestimmt sind, daß nach dem Auftreffen des Kolbens (7) auf den Anschlag (55) das Volumen des Arbeitsraumes (25) durch das Eindringen von wenigstens einem der beiden Teile in das Innere des Zylinders (5) verringert wird.

14. Straffer nach einem der vorstehenden Ansprüche, gekennzeichnet durch einen Dämpfungskolben (37; 67), der in nicht betätigtem Zustand des Straffers (1) im Bereich des ersten Endes des Zylinders (5) angeordnet ist, durch das erste Teil in Richtung zum Kolben (7) verschoben wird und das Volumen des Arbeitsraumes (25) verringert.

15. Straffer nach Anspruch 14, dadurch gekennzeichnet, daß das zweite Teil mit dem Dämpfungskolben (37; 67) gekoppelt ist.

16. Straffer nach Anspruch 14, dadurch gekennzeichnet, daß der Dämpfungskolben (37; 67) einstückig mit dem zweiten Teil verbunden ist.

17. Straffer nach einem der Ansprüche 14 bis 16, dadurch gekennzeichnet, daß ein radialer Spalt zwischen dem Dämpfungskolben (37; 67) und der Innenseite des Zylinders (5) mit zunehmender, vom Dämpfungskolben (37; 67) zurückgelegter Strecke kleiner wird.

18. Straffer nach einem der vorstehenden Ansprüche, gekennzeichnet durch eine Befestigungseinrichtung (49), die das Zugübertragungsmittel (11) mit dem Kolben (7) verbindet und die so ausgebildet ist, daß das Zugübertragungsmittel (11) vom Kolben (7) beim Verzögern des Kolbens (7) entkoppelt wird.

19. Straffer nach Anspruch 18, dadurch gekennzeichnet, daß der Kolben (7) eine Öffnung aufweist, durch die sich das kolbenseitige, freie Ende des Zugübertragungsmittels (11) hindurch erstreckt und daß die Befestigungseinrichtung (49) einen am freien Ende angebrachten, in Straffrichtung (R) kraftübertragenden Mitnehmer hat, der sich beim Verzögern des Kolbens (7) von diesem löst und zusammen mit dem Zugübertragungsmittel (11) weiter in Straffrichtung (R) bewegt.

20. Straffer nach Anspruch 19, dadurch gekennzeichnet, daß der Mitnehmer ein Konus und die Öffnung im Kolben (7) komplementär zum Konus ausgebildet ist.

21. Straffer nach einem der vorstehenden Ansprüche, dadurch gekennzeichnet, daß die Druckgasquelle (17) im Inneren des Zylinders (5) angeordnet ist und an die Stirnwand am ersten Ende des Zylinders (5) angrenzt.

22. Straffer nach Anspruch 21, dadurch gekennzeichnet, daß die Druckgasquelle (17) ein hohles, kreisringförmiges und mit Treibmittel gefülltes Gehäuse (19) aufweist.

23. Straffer nach einem der vorstehenden Ansprüche, dadurch gekennzeichnet, daß das erste Teil eine sich zum zweiten Teil hin konisch verjüngende Außenkontur hat.

24. Straffer nach einem der vorstehenden Ansprüche, gekennzeichnet durch von der Innenseite des Zylinders (5) abstehende Störkonturen, die vom Kolben (7) überfahren werden können und ihn verzögern.

25. Straffer nach einem der vorstehenden Ansprüche, dadurch gekennzeichnet, daß das Gurtangriffsmittel (13) ein Gurtschloß ist.

26. Straffer nach Anspruch 25, dadurch gekennzeichnet, daß das erste Teil eine zur Befestigung des Gurtschlosses am Zugübertragungsmittel (11) dienende Seilkausche (15) ist.

27. Straffer nach Anspruch 25 oder 26, dadurch gekennzeichnet, daß das Gurtschloß ein Gehäuse (29) aufweist und das erste Teil bis zum Anschlag des Gehäuses (29) am Zylinder (5) in das Innere des Zylinders (5) eindringt.

28. Straffer nach Anspruch 27, dadurch gekennzeichnet, daß das Gehäuse (29) an der dem Zylinder zugewandten Stirnseite wenigstens eine Rippe (35) aufweist, die gegen Ende der Bewegung des Gehäuses auf den Zylinder (5) schlägt und dabei plastisch deformiert wird.

29. Straffer nach einem der vorstehenden Ansprüche, dadurch gekennzeichnet, daß das Zugübertragungsmittel (11) ein Zugseil ist.

30. Straffer nach einem der vorstehenden Ansprüche, dadurch gekennzeichnet, daß der Zylinder (5) an seinem zweiten Ende mit einer Öffnung versehen ist, in die das Zugübertragungsmittel (11) gegen Ende seiner Bewegung eindringt.

31. Straffer nach Anspruch 30, dadurch gekennzeichnet, daß sich das Zugübertragungsmittel (11) gegen Ende seiner Bewegung durch die Öffnung hindurch bis außerhalb des Zylinders (5) erstreckt.

32. Straffer nach Anspruch 30 oder 31, gekennzeichnet durch ein elastisches Federelement (53) im Inneren des Zylinders (5), das nach erfolgter Straffung und Dämpfung der Bewegung des Gurtanlenkglieds (13) für eine gewisse Rückstellung des Gurtanlenkglieds (13) sorgt.

## Claims

1. A tensioner for a safety belt, with a piston/cylinder unit (3), which comprises a cylinder (5) and a piston (7) arranged in its interior, with a compressed gas source (17), on the activation of which the piston (7) is displaced, with a belt engaging means (13) which engages on the safety belt, with a traction transfer means (11) which connects the piston (7) with the belt engaging means (13), and with a damping means for the absorption of energy on deceleration of the movement of the belt engaging means (13), the cylinder (5) having a first end closer to the belt engaging means (13) and a second end further away from it, the damping means having a first part connected with the traction transfer means (11), surrounding the traction transfer means (11) at least partially and arranged outside the cylinder (5) in the non-actuated state of the tensioner, and having a second part connected with the cylinder (5) and provided on the end wall (23) at the first end, the parts being moved towards each other during tensioning and providing for the damping, characterized in that the first part displaces the second part at least partially into the interior of the cylinder (5) during the damping process.

2. The tensioner according to Claim 1, characterized in that the first part strikes onto the second part and displaces the second part into the interior of the cylinder (5).

3. The tensioner according to Claim 1, characterized in that the first part penetrates into the second part and displaces the second part into the interior of the cylinder (5).

4. The tensioner according to Claim 1, characterized in that the first part penetrates into the second part and the first part moves into the interior of the cylinder (5).

5. The tensioner according to any of the preceding claims, characterized in that the second part forms at least one section of the end wall of the cylinder (5) at the first end.

6. The tensioner according to Claim 5, characterized in that the second part is constructed as a separate part fastened to the cylinder (5) and released from its fastening by the first part.

7. The tensioner according to any of the preceding claims, characterized in that the second part is constructed as a seal which separates the interior of the cylinder (5) from the exterior of the cylinder (5) and has an opening through which the traction transfer means (11) extends.

8. The tensioner according to Claim 7, characterized in that between the outer surface of the traction transfer means (11) and the second part a sealing material is provided.

9. The tensioner according to Claim 7 or 8, characterized in that when the tensioner (1) is not actuated, the seal exerts a clamping force on the traction transfer means (11), which clamping force counteracts an unintentional rotation and an axial displacement of the traction transfer means.

10. The tensioner according to any of Claims 5 to 9, characterized in that the second part is fastened at its peripheral rim to the cylinder (5) by rolling or beading.

11. The tensioner according to any of the preceding claims, characterized in that the second part has a sleeve-shaped section (43) which in the non-actuated state of the tensioner (1) is situated substantially outside the cylinder (5), and that in the actuated state of the tensioner the first part strikes against the sleeve-shaped section (43) and deforms it plastically.

12. The tensioner according to any of the preceding claims, characterized in that the second part is made of metal.

13. The tensioner according to any of the preceding claims, characterized in that inside the cylinder (5) a working space (25) is provided for the gas which is released, and also a stop (55) is provided for the piston (7), and that the position of the first and of the second part, of the piston (7) and of the stop (55) are coordinated with each other such that after the striking of the piston (7) onto the stop (55) the volume of the working space (25) is reduced by the penetration of at least one of the two parts into the interior of the cylinder (5).

14. The tensioner according to any of the preceding claims, characterized by a damping piston (37; 67) which in the non-actuated state of the tensioner (1) is arranged in the region of the first end of the cylinder (5), is displaced by the first part towards the piston (7) and reduces the volume of the working space (25).

15. The tensioner according to Claim 14, characterized in that the second part is coupled with the damping piston (37; 67).

16. The tensioner according to Claim 14, characterized in that the damping piston (37; 67) is connected integrally with the second part, forming one piece.

17. The tensioner according to any of Claims 14 to 16, characterized in that a radial gap between the damping piston (37; 67) and the inner face of the cylinder (5) becomes smaller with an increasing distance covered by the damping piston (37; 67).

18. The tensioner according to any of the preceding claims, characterized by a fastening means (49) which connects the traction transfer means (11) with the piston (7) and which is constructed so that the traction transfer means (11) is uncoupled from the piston (7) on deceleration of the piston (7).

19. The tensioner according to Claim 18, characterized in that the piston (7) has an opening through which the free end of the traction transfer means (11) on the piston side extends, and that the fastening means (49) has a carrier arranged at the free end and transferring force in the tensioning direction (R), which on deceleration of the piston (7) detaches itself therefrom and together with the traction transfer means (11) moves further in the tensioning direction (R).

20. The tensioner according to Claim 19, characterized in that the carrier is a cone and the opening in the piston (7) is constructed so as to be complementary to the cone.

21. The tensioner according to any of the preceding claims, characterized in that the compressed gas source (17) is arranged inside the cylinder (5) and adjoins the end wall at the first end of the cylinder (5).

22. The tensioner according to Claim 21, characterized in that the compressed gas source (17) has a hollow housing (19) in the shape of a circular ring and filled with propellant.

23. The tensioner according to any of the preceding claims, characterized in that the first part has an outer contour conically tapered towards the second part.

24. The tensioner according to any of the preceding claims, characterized by interference contours projecting from the inner face of the cylinder (5), which contours can be traveled over by the piston (7) and decelerate it.

25. The tensioner according to any of the preceding claims, characterized in that the belt engaging means (13) is a belt buckle.

26. The tensioner according to Claim 25, characterized in that the first part is a thimble (15) serving to fasten the belt buckle to the traction transfer means (11).

27. The tensioner according to Claim 25 or 26, characterized in that the belt buckle has a housing (29) and the first part penetrates into the interior of the cylinder (5) up to the stop of the housing (29) on the cylinder (5).

28. The tensioner according to Claim 27, characterized in that the housing (29) has at least one rib (35) on the end face facing the cylinder, which rib (35) strikes onto the cylinder (5) towards the end of the movement of the housing and in so doing is plastically deformed.

29. The tensioner according to any of the preceding claims, characterized in that the traction transfer means (11) is a traction cable.

30. The tensioner according to any of the preceding claims, characterized in that the cylinder (5) is provided at its second end with an opening into which the traction transfer means (11) penetrates towards the end of its movement.

31. The tensioner according to Claim 30, characterized in that the traction transfer means (11), towards the end of its movement, extends through the opening to outside the cylinder (5).

32. The tensioner according to Claim 30 or 31, characterized by an elastic spring member (53) inside the cylinder (5), which provides for a certain resetting of the belt articulation member (13) after the tensioning and the damping of the movement of the belt articulation member (13) have been completed.

## Revendications

1. Tendeur pour une ceinture de sécurité, comportant une unité (3) à piston et cylindre comprenant un cylindre (5) et un piston (7) disposé à l'intérieur de cette unité, une source de gaz sous pression (17) dont l'activation déplace le piston (7), un dispositif (13) de saisie de sangle de ceinture, qui est en prise sur la ceinture de sécurité, un moyen de transmission (11) de la traction, qui relie le piston (7) au dispositif (13) de saisie de sangle, et avec un dispositif d'amortissement pour absorber l'énergie lors du ralentissement du mouvement du dispositif (13) de saisie de sangle, le cylindre (5) présentant une première extrémité plus proche du dispositif de saisie de sangle (13) et une extrémité plus éloignée de ce dispositif, le dispositif d'amortissement présentant une première partie, reliée au dispositif de transmission (11) de la traction et entourant au moins partiellement ledit dispositif de transmission (11) et disposée hors du cylindre quand le tendeur n'est pas en position actionnée, et une deuxième partie, reliée au cylindre (5) et prévue sur la paroi frontale (23) à la première extrémité, les parties se déplaçant l'une vers l'autre lors du raidissement et assurant l'amortissement, caractérisé en ce qu'au cours de l'amortissement la première partie déplace au moins partiellement la deuxième partie à l'intérieur du cylindre (5).

2. Tendeur selon la revendication 1, caractérisé en ce que la première partie arrive sur la deuxième partie et déplace la deuxième partie à l'intérieur du cylindre (5).

3. Tendeur selon la revendication 1, caractérisé en ce que la première partie pénètre dans la deuxième partie et déplace la deuxième partie à l'intérieur du cylindre (5).

4. Tendeur selon la revendication 1, caractérisé en ce que la première partie pénètre dans la deuxième partie et la première partie parvient à l'intérieur du cylindre (5).

5. Tendeur selon l'une des revendications précédentes, caractérisé en ce que la deuxième partie forme au moins une section de la paroi frontale du cylindre (5) à la première extrémité.

6. Tendeur selon la revendication 5, caractérisé en ce que la deuxième partie forme une partie séparée, fixée sur le cylindre (5), ladite partie étant libérée de sa fixation par la première partie.

7. Tendeur selon l'une des revendications précédentes, caractérisé en ce que la deuxième partie forme une garniture d'étanchéité, qui sépare l'intérieur du cylindre de l'extérieur du cylindre (5) et qui présente un orifice, à travers lequel s'étend le moyen (11) de transmission de la traction.

8. Tendeur selon la revendication 7, caractérisé en ce qu'un matériau d'étanchéité est prévu entre la surface extérieure du moyen (11) de transmission de la traction et la deuxième partie.

9. Tendeur selon la revendication 7 ou 8, caractérisé en ce que la garniture d'étanchéité, quand le tendeur (1) n'est pas actionné, exerce sur le moyen (11) de transmission de la traction, une force de serrage qui s'oppose à une rotation involontaire et à un déplacement axial du moyen de transmission de la traction.

10. Tendeur selon la revendication 5 ou 9, caractérisé en ce que la deuxième partie est fixée sur son bord périphérique sur le cylindre (5) par enroulement ou par rabbattement.

11. Tendeur selon l'une des revendications précédentes, caractérisé en ce que la deuxième partie présente une section (43) en forme de manchon, qui se trouve, quand le tendeur (1) n'est pas en position actionnée, sensiblement en dehors du cylindre (5), et en ce que, quand le tendeur est en position actionnée, la première partie donne contre la section (43) en forme de manchon et la déforme plastiquement.

12. Tendeur selon l'une des revendications précédentes, caractérisé en ce que la deuxième partie est en métal.

13. Tendeur selon l'une des revendications précédentes, caractérisé en ce qu'il est prévu à l'intérieur du cylindre (5) un espace de travail (25) pour le gaz libéré ainsi qu'une butée (55) pour le piston (7) et en ce que les positions de la première partie et de la deuxième partie, du piston (7) et de la butée (55) sont ajustées les unes aux autres de telle sorte que, après arrivée du piston (7) sur la butée (55), le volume de l'espace de travail (25) soit réduit par la pénétration d'au moins une des deux parties à l'intérieur du cylindre (5).

14. Tendeur selon l'une des revendications précédentes, caractérisé par un piston d'amortissement (37, 67), qui, quand le tendeur (1) n'est pas en position actionnée, est disposé dans la zone de la première extrémité du cylindre (5), est déplacé par la première partie en direction du piston (7) et réduit le volume de l'espace de travail (25).

15. Tendeur selon la revendication 14, caractérisé en ce que la deuxième partie est accouplée au piston d'amortissement (37, 67).

16. Tendeur selon la revendication 14, caractérisé en ce que le piston d'amortissement (37, 67) est relié d'un seul tenant à la deuxième partie.

17. Tendeur selon l'une des revendications 14 à 16, caractérisé en ce qu'une fente radiale se trouvant entre le piston d'amortissement (37, 67) et le côté intérieur du cylindre (5) devient plus petite quand la distance parcourue par le piston d'amortissement (37, 67) augmente.

18. Tendeur selon l'une des revendications précédentes, caractérisé par un dispositif de fixation (49), qui relie le moyen (11) de transmission de la traction au piston (7) et qui est constitué de telle sorte que le moyen (11) de transmission de la traction soit découplé du piston (7) lors du ralentissement du piston.

19. Tendeur selon la revendication 18, caractérisé en ce que le piston (7) présente un orifice, à travers lequel s'étend l'extrémité libre du moyen (11) de transmission de la traction, située du côté du piston, et en ce que le dispositif de fixation (49) a un entraineur, placé sur l'extrémité libre, qui transmet les forces dans le sens du raidissement (R) et qui se détache du piston (7) lors du ralentissement de celui-ci et continue à se déplacer dans le sens du raidissement (R) avec le moyen (11) de transmission de la traction.

20. Tendeur selon la revendication 19, caractérisé en ce que l'entraîneur est un cône et l'orifice dans le piston (7) est de forme complémentaire au cône.

21. Tendeur selon l'une des revendications précédentes, caractérisé en ce que la source de gaz sous pression (17) est disposée à l'intérieur du cylindre (5) et est adjacente à la paroi frontale sur la première extrémité du cylindre (5).

22. Tendeur selon la revendication 21, caractérisé en ce que la source de gaz sous pression (17) présente un carter creux, de forme annulaire et rempli d'un moyen de propulsion.

23. Tendeur selon l'une des revendications précédentes, caractérisé en ce que la première partie a un contour extérieur qui va en se rétrécissant de façon conique en direction de la deuxième partie.

24. Tendeur selon l'une des revendications précédentes, caractérisé par des contours perturbateurs faisant saillie hors de la face intérieure du cylindre (5) sur lesquels le piston (7) peut passer et qui le ralentissent.

25. Tendeur selon l'une des revendications précédentes, caractérisé en ce que le dispositif (13) de saisie de sangle de ceinture est une serrure de ceinture.

26. Tendeur selon la revendication 25, caractérisé en ce que la première partie est une cosse à cordage (15) servant à fixer la serrure de ceinture sur le moyen (11) de transmission de la traction.

27. Tendeur selon la revendication 25 ou 26, caractérisé en ce que la serrure de ceinture présente un carter (29) et la première partie pénètre à l'intérieur du cylindre (5) jusqu'à ce que le carter (29) bute contre le cylindre (5).

28. Tendeur selon la revendication 27, caractérisé en ce que le carter (29) présente au moins une nervure (35), qui vient en butée contre le cylindre (5) vers la fin du mouvement et qui, ce faisant, subit une déformation plastique.

29. Tendeur selon l'une des revendications précédentes, caractérisé en ce que le moyen (11) de transmission de la traction est un câble de traction.

30. Tendeur selon l'une des revendications précédentes, caractérisé en ce que le cylindre (5) est pourvu à sa deuxième extrémité d'un orifice, dans lequel le moyen (11) de transmission de la traction pénètre vers la fin de son mouvement.

31. Tendeur selon la revendication 30, caractérisé en ce que vers la fin de son mouvement, le moyen (11) de transmission de la traction s'étend à travers l'orifice jusqu'à l'extérieur du cylindre (5).

32. Tendeur selon la revendication 30 ou 31, caractérisé par un élément à ressort (53) élastique à l'intérieur du cylindre (5), qui assure un certain retour de l'organe d'articulation de ceinture (13) après raidissement et amortissement du mouvement de l'organe d'articulation de ceinture(13).
